# EUROPÄISCHE PATENTANMELDUNG

(11) **EP 2 774 813 A2**
(43) Veröffentlichungstag der Anmeldung: **10.09.2014**
(21) Anmeldenummer: 14000828.5
(22) Anmeldetag: 09.03.2014
(51) Int. Cl.: B60P 7/08

(54) **Ladungssicherung mit Spanngurten und Kettenzügen**

(30) Priorität: 09.03.2013 DE 102013003979; 16.03.2013 DE 102013004404; 15.04.2013 DE 102013006486
(71) Anmelder: Grüter, Karl-Heinz, 44649 Herne (DE)
(72) Erfinder: Grüter, Karl-Heinz, 44649 Herne (DE)
(74) Vertreter: Kaewert, Klaus

(57) **Zusammenfassung**

Nach der Erfindung finden bei der Ladungssicherung Kraftsensoren Anwendung, mit denen die Spannung in den zur Ladungssicherung verwendeten Zurrmittel gemessen wird.

## Beschreibung

Die Ladungssicherung umfaßt die Sicherungen von Ladungen im Straßenverkehr und/oder Eisenbahnverkehr und/oder Luftverkehr und/oder Schiffsverkehr.

Nach Untersuchungen der Versicherungswirtschaft in 2005 sind allein im Straßenverkehr etwa 70% aller Ladungen nicht ausreichend gesichert. 13% aller Lkw-Unfälle sollen auf mangelhafte Ladungssicherung zurückzuführen.

In Deutschland verlangt die Straßenverkehrsordnung eine Ladungssicherung. Fahrzeuge müssen so beschaffen sein, daß ihr verkehrsüblicher Betrieb niemanden schädigt oder mehr als unvermeidbar gefährdet, behindert oder belästigt.

Außerdem ist zu berücksichtigen, daß auch ohne Verkehrsunfall bei mangelnder Ladungssicherung am Fahrzeug und an der Ladung erheblicher Schaden entstehen kann.

Die Ladung kann auf der Fahrzeugfläche rutschen, kippen, rollen, wandern oder auch vom Fahrzeug fallen. Dies kann durch Bremsen, Anfahren/Beschleunigen, Kurvenfahrten, aber auch durch Unebenheiten der Fahrbahn verursacht werden. Es ist üblich, die Ladung mit Spanngurten und Kettenzügen(Zurrmittel) zu sichern. Mit Zurrmitteln wird die Ladung am Fahrzeug verspannt. Es ist bekannt, die Spannung beim Anlegen der Zurrmittel zu messen.

Die Verspannung kann zum Beispiel ausschließlich eine Anpressung gegen die Ladefläche bewirken. Dann ist die Reibung die alleinige Sicherung gegen eine Verschiebung der Ladung. Wenn die Zurrmittel dagegen an die Ladung angeschlagen werden können, dann kann damit noch eine wesentlich bessere Ladungssicherung erfolgen.

In jedem Fall bedingt die Verspannung der Zurrmittel eine Spannung in den Zurrmitteln, die sich je nach Bewegung des Fahrzeuges und je nach Verlauf der Zurrmittel erhöht oder erniedrigt. Die beim Verspannen ohne die Belastungen aus der Bewegung des Fahrzeuges entstehende Spannung wird als Vorspannung bezeichnet.

Probleme entstehen, wenn die Spannung der Zurrmittel unter die vorgesehene Vorspannung fällt. Dann können die vorstehend erläuterten Bewegungen der Ladung und eine große Unfallgefahr entstehen. Die Lkw-Fahrer sind deshalb gehalten, die Spannung der Zurrmittel in Abständen zu prüfen. Das ist nicht praktikabel, solange die Fahrer nicht von dem üblicherweise bestehenden Termindruck nicht entlastet werden und solange auf Autobahnen und Landstraßen keine ausreichende Haltemöglichkeiten geschaffen werden.

Es sind bisher diverse Anstrengungen zur Verbesserung der Ladungssicherung gemacht worden. Das betrifft sowohl die Zurrmittel als auch die Hilfsmittel. Es sind zum Beispiel Regeln für die Anzahl und die Beschaffenheit der Zurrmittel aufgestellt worden. Es wird höchsten Wert auf bündiges, lückenlosesVerladen gelegt. Zugleich werden an die Fahrzeugwände bestimmte Anforderungen gestellt.

Die Zurrmittel sind vorzugsweise Gurte oder Ketten.

Die Zurrmittel werden über Endbeschläge mit dem Fahrzeug verbunden. Dabei umgreifen die Zurrmittel zum Beispiel die Ladung und/oder sind die Zurrmittel auch an der Ladung angeschlagen.

Zum Anschlagen an der Ladung und/oder am Fahrzeug dienen zum Beispiel Haken. Die Haken können in einfacher Ausführung S-förmig sein. Andere Haken sind als Karabiner-Haken ausgebildet. Solche Haken besitzen eine Sicherung gegen Lösen. Weitere Haken unterscheiden sich im Anschluß an die Zurrmittel. Manche Haken besitzen einen Gabelkopf als Anschluß oder eine feste Öse oder eine drehbewegliche Öse(Wirbel).

Es gibt auch Spitzhaken, Klauenhaken, Flachhaken, Palettenhaken.

Zum Anschlagen an der Ladung und/oder am Fahrzeug können auch Ösen dienen. Die Ösen können angeschraubt oder angeformt sein. Die Ösen konnen unterschiedliche Formen aufweisen. Während runde Ösen besonders für Spannketten als Zugmittel geeignet sind, sind Ösen besonders für Spanngurte geeignet, die mindestens teilweise gerade verlaufen. Häufig kommen dabei dreieckförmige Ösen vor, welche die Bezeichnung Triangel tragen. Andere Ösen mit einem gerade verlaufenden Teil werden als D-Ösen bezeichnet. Die Gurte sollen in dem gerade verlaufenden Ösenteil anliegen.

Zum Anschlagen an der Ladung und/oder am Fahrzeug können auch Schäkel Anwendung finden. Schäkel besitzen üblicherweise eine Bügelform, wobei ein Bolzen durch eine Öffnung in dem einen Schäkelende geführt und in dem anderen Schäkelende verschraubt wird.

Zum Anschlagen an der Ladung und/oder am Fahrzeug können auch Ringschrauben dienen. Ringschrauben unterscheiden sich von normalen Schrauben dadurch, daß der Schraubenkopf durch einen Ring gebildet wird. Zum Anschlagen am Fahrzeug kommen auch andere Beschläge vor. Dazu gehören sowohl lösbare Anker als auch fest montierte Schienen und fest montierte andere Beschläge vor.

Zur Spannung der Gurte kommen vorzugsweise Ratschen zur Anwendung. Ratschen können aber auch zur Kettenspannung Anwendung finden.

Die Ratschen besitzen einen hin- und hergehend bewegten Hebel, der bei der Bewegung in der einen Richtung eine Spannwelle dreht und bei der Bewegung in der anderen Richtung kein Moment auf die Spannwelle ausübt. Zugleich wird die Spannwelle gegen Lösen mittels eines verzahnten Hebels gehalten, der in eine besondere Ratschen-Verzahnung der Spannwelle greift.

Es sind zugleich Ratschen bekannt, an denen die jeweils herrschende Spannkraft mechanisch angezeigt wird. Solche Ratschen sind zum Beispiel beschrieben in der DE202011051 558, DE102010038001. Solche Ratschen sind um ein Vielfaches aufwendiger als normale Ratschen. Mit den Ratschen kann die Spannkraft beim Aufladen bzw. vor der Abfahrt des Fahrzeuges geklärt werden. Ein gewünschtes Anhalten des Fahrzeuges in angemessenen Abständen und Nachspannen ist damit nicht gesichert.

Das gleiche gilt für mechanische Vorrichtungen zum Nachprüfen der Gurtspannung, wie sie beschrieben sind in der DE3138655, DE102011010574 und DE202011050268.

Übliche Spannmittel für Ketten sind sogenannte Spannschlösser. Die Spannschlüsser bestehen aus einem rahmenartigen Gehäuse mit Gewindebohrungen an den Schmalseiten. Die Gewindebohrungen sind gegenläufig ausgelegt. Das heißt, das eine Gewinde ist als Linksgewinde ausgelegt, währen das andere Gewinde als Rechtsgewinde ausgelegt ist. In die Gewindebohrungen greifen Schrauben mit einem Gewinde, das der jeweiligen Gewindebohrung angepaßt ist. Die Schraubenköpfe werden durch Haken und/oder Ösen gebildet. Eine Drehung des Gehäuses bewirkt infolge der unterschiedlichen Gewinde, daß sich die Schrauben einander nähern oder bei Drehung in der gegenläufigen Richtung voneinander entfernen.

Neben den Zurrmitteln sind als Hilfsmittel zur Ladungssicherung bekannt: Paletten, rutschhemmende Matten, Hölzer, Schienen, Ladebalken und Sperrbalken, Staupolster.

Außerdem müssen die verwendeten Zurrgurte/Spanngurte in Deutschland detailliert gekennzeichnet werden. Das schließt Angaben zur normalen Vorspannung, zur aufnehmbaren Kraft wie auch Angaben zum Hersteller und zum Herstellungsjahr sowie zur Art des verwendeten Materials ein. Zusätzlich wird eine farbliche Gestaltung genutzt, um übliche Materialien zu kennzeichnen. Gurte aus Polyester sind blau, Gurte aus Polypropylen sind braun, Gurte aus Polyamid sind grün, Gurte aus sonstigem Material sind braun.

Die Kennzeichnung erleichtert der für die Ladungssicherung zuständigen Person die Auswahl der Gurte. Aber auch die Kontrolle der Ladungssicherung durch Polizei und Zoll wird mit der Kennzeichnung erleichtert.

Die Erfindung hat erkannt, daß nicht nur beim Verspannen der Ladung sowie bei der anschließenden Kontrolle der Ladungssicherung Fehler gemacht werden, sondern auch ein unerwarteter Verlust der Vorspannung eintreten kann. Unerwartet ist der Verlust der Vorspannung, wenn trotz der vorstehend beschriebenen Kontrolle und dabei festgestellter Vorspannung dennoch ein Verlust der Vorspannung eintritt. Das kann zum Beispiel durch besonders heftige Fahrmanöver oder durch besonders starke Unebenheiten entstehen.

Die Erfindung hat auch erkannt, daß bei der Ladungssicherung mittels Zurrmitteln die Spannung verloren gehen kann, wenn die Zurrmittel die Ladung umschlingen. Dann entstehen Zurrmittelabschnitte mit unterschiedlicher Spannung. Die Spannung kann dann zwar in den Abschnitten ausreichend sein, welche den Anschlagpunkten der Zurrmittel an dem Fahrzeug/Schiff/Flugzeug benachbart sind, aber dort sehr schnell nachlassen, wenn die Spannung in den anderen Abschnitten deutlich geringer sein. Das wird darauf zurück geführt, daß die Zurrmittel an den Berührungsstellen mit der Ladung einen Reibungswiderstand finden. Erfahrene Personen bemühen sich deshalb bei der Ladungssicherung um ein sogenanntes Nachsetzen der Zurrmittel. Das Nachsetzen erfolgt durch Rucken an den gespannten Zurrmitteln. Ziel des Nachsetzens ist eine Vergleichmäßigung der Spannung in den Zurrmitteln. Häufig ist das Nachsetzen unzulänglich. Die Gründe können unterschiedlich sein.

Bei unterbliebenem Nachsetzen oder unzulänglichem Nachsetzen führen die Bewegungen der Ladung beim Transport zu einem selbsttätigem Nachsetzen und einer damit verbundenen Verteilung der Spannung im Zurrmittel, so daß die Spannung in den entscheidenden Abschnitten des Zurrmittels unter die erforderliche Mindestvorspannung fallen kann.

Wenn dies innerhalb eines Intervalles erfolgt, in dem ein Nachprüfen der Ladungssicherung erwünscht ist, fehlt es auch dann an einer ausreichenden Ladungssicherung, wenn wider Erwarten von dem Fahrer eine gewünschte Nachprüfung in "angemessenen" Zeitabständen erfolgt.

Die Erfindung hat auch erkannt, daß trotz richtiger Spannung in den Zurrmitteln ein Fehler der Ladungssicherung vorliegen kann. Der Fehler kann in einer zu geringen Zahl von Zurrmitteln liegen. Bei zu geringer Zahl von Zurrmitteln kann es bei erwarteter Belastung während des Transports der Ladung zu einer Überlastung der vorhandenen Zurrmittel kommen. Die Überlastung der Zurrmittel ist ähnlich gefährlich wie ein unerwarteter Verlust der Vorspannung. Die Erfindung hat auch erkannt, daß ein unerwarteter Verlust der Vorspannung bei einer Beschädigung der Ladung, insbesondere bei einer Beschädigung der Verpackung, eintreten kann. Als relevante Beschädigung der Ladung bzw. der Verpackung kann jede ganz oder teilweise bleibende Verformung der Ladung oder Verpackung im Berührungsbereich mit den Zurrmitteln bei deren Transport angesehen werden. Eine solche Verformung kann zum Beispiel durch Einschneiden der Zurrmittel in die Verpackung oder durch Bruch der Verpackung oder durch Bruch von Anschlagbolzen und/oder Anschlagösen an der Ladung sein.

In einem solchen Fall können alle bekannten Spannmittel nicht helfen, weil die Überlastung der Spannmittel beim Bremsen mit den bekannten Spannmitteln und Prüfeinrichtungen nicht angezeigt werden kann. Es wird nämlich nicht während eines Bremsvorganges sondern im Stillstand des Fahrzeuges geprüft.

Die Erfindung hat sich die Aufgabe gestellt, die Ladungssicherung zu verbessern.

Nach der Erfindung wird das mit den Merkmalen des Hauptanspruches erreicht. Die Unteransprüche beschreiben bevorzugte Ausführungsbeispiele der Erfindung.

Wesentlich ist die erfindungsgemäße Messung der Spannung im Zurrmittel während der Bewegung der Ladung. Dabei erlaubt die erfindungsgemäße Meßvorrichtung auch eine an sich bekannte Messung der Spannung im Zurrmittel während der Ruhelage der Ladung.

Die an sich bekannte Messung der Spannung erfolgt üblicherweise bei der Herstellung der Ladungssicherung mit Zurrmitteln von Hand. Darüber hinaus soll die Spannung der Zurrmittel in den Pausen beim Lkw-Transport geprüft werden. Die Pausen sind durch Verkehrsrecht beim Lkw-Transport nur vorgeschrieben, solange ein einziger Fahrer den Lkw lenkt. Außerdem ist offen, ob und inwieweit dabei eine Prüfung aller Zurrmittel möglich ist. Häufig sind die Fahrzeuge/Lkw versiegelt, so daß die Zurrmittel für eine Prüfung gar nicht zugänglich sind.

Noch häufiger sind die Zurrmittel in den Fahrzeugen/Lkw aus anderen Gründen gar nicht zugänglich oder nur sehr schlecht zugänglich.

Außerdem verbietet sich eine händische Prüfung der Spannung an den Zurrmitteln während der Lkw-Fahrt von selbst.

Zwar sind auch Spannungsmeßvorrichtungen für Zurrmitteln aus der DE 3138655, DE202011050268 und DE202011051558 bekannt. Solche Vorrichtungen sind aber nur für eine Spannungsmessung bei ruhendem Lkw geeignet. Die bekannten Spannungsmeßvorrichtungen haben sich bisher selbst dort nicht durchsetzen können.

Das ist darauf zurückzuführen, daß die bekannten Spannungsmeßvorrichtungen für Zurrmittel im Vergleich zur vorstehend erläuterten Spannungsmessung von Hand technisch und arbeitsmäßig sehr aufwendig sind.

Die Spannungsmeßvorrichtungen der DE3138655 und DE202011050268 basieren darauf, daß die Zurrmittel mit zwei beabstandete Auflagen hinterfaßt werden und mit einer definierten Kraft belastet werden, um die Auslenkung der Zurrmittel zu messen.

Zwar schließt die DE202011050268 auch eine elektrische/elektronische Aufnahme der Auslenkung und Anzeige der Auslenkung ein, ein Hinweis auf eine Messung der Spannung während der Lkw-Fahrt und auf einen Alarm für den Fahrer bei Unterschreiten eines einstellbaren Mindestwertes und/oder Überschreiten eines einstellbaren maximalen Wertes ist dem aber nicht zu entnehmen.

Die DE202011051558 steht stellvertretend für eine Reihe von Druckschriften, in denen Spannratschen für Spanngurte dargestellt und beschrieben sind, wobei die Spannratschen den Spannungszustand mechanisch anzeigen. Ferner ist in der DE20201151558 der gleiche Hinweis auf elektrische/elektronische Umsetzung der Meßwerte und deren elektrische/elektronische Anzeige enthalten. Ein Hinweis auf die erfindungsgemäße Messung und den Alarm beim Unterschreiten von einstellbaren Mindestspannungen und/oder Überschreiten von einstellbaren maiximalen Spannungen ist dem nicht zu entnehmen.

Trotz der großen Risiken beim Ladungstransport und des damit verbundenen Bedarfes an Informationen über Mängel der Ladungssicherung ist es bisher nicht zu einer Spannungsmessung während der Lkw-Fahrt und zu einer Information der Fahrer über Mängel der Ladungssicherung während der Fahrt gekommen.

Nach der Erfindung erfolgt die Spannungsmessung mit einer Meßvorrichtung, die Umformung der Meßwerte in Signale und die Übermittlung der Signale an den Fahrer. Vorteilhafterweise kann mit Hilfe der Meßvorrichtung die Zurrspannung vom Fahrerhaus/Führerstand/Cockpit/Schiffsbrücke aus bzw. aus der Ferne kontrolliert werden, wenn dazu ein Anlaß gegeben ist. Zusätzlich kann bei Überschreiten oder Unterschreiten gewünschter Zurrspannungsgrenzen eine optische und/oder oder akustische Warnung gegeben werden. Sobald ein Grenzwert überschritten oder unterschritten wird, wird der Fahrer/Lokomotivführer/Schiffsführer/Flugzeugführer darauf aufmerksam gemacht. Die Folge ist eine Überprüfung der Ladungssicherung. Im Rahmen der Überprüfung der Ladungssicherung kann es zu einem Nachspannen der Zurrmittel und/oder zum Einsatz ergänzender Zurrmittel und/oder zur Auswechselung von Zurrmitteln kommen.

Mit der Erfindung können die Mängel bei der Ladungssicherung verhindert werden bzw. baldmöglichst behoben werden. Üblicherweise werden bei jeder Verkehrskontrolle so viele mangelhaft gesicherte Ladungen gefunden, daß es schon ein großer Gewinn ist, wenn diese Mängel nur zum Teil vermieden werden.

Die Messung der Spannung in den Zurrmitteln kann an den Zurrmittelenden und/oder einem oder mehreren Abschnitten der Zurrmittel und/oder an den Anschlagpunkten für die Zurrmittel erfolgen.

Die Messung an allen Befestigungspunkten und/oder Zurrmittelenden ist auch dann von Vorteil, wenn die Zurrmittel die Ladung überfassen und/oder umfassen und/oder ein Spannmittel an jedem Gurt oder Kette vorgesehen ist. Dann können sehr leicht unterschiedliche Vorspannungen in den verschiedenen Abschnitten des Zurrmittels entstehen. Mit Abschnitten sind Zurrmittellängen bezeichnet, die zwischen den Anschlagpunkten des Zurrmittels am Fahrzeug und/oder zwischen den Berührungspunkten des Zurrmittels an der Ladung und/oder zwischen Anschlagpunkten und Berührungspunkten bestehen.

Die Messung kann kontinuierlich oder diskontinuierlich erfolgen.

Eine diskontinuierliche Messung ist von Vorteil, wenn die zur Messung und/oder Umformung der Meßwerte und/oder Übermittlung der Signale genutzte elektrische Energie mittels Batterien beigestellt wird. Durch diskontinuierliche Messung kann der Energieverbrauch extrem gestreckt werden. Vorzugsweise ist zwischen zwei Messungen an einem Kraftsensor eine Meßpause von mindestens 30 Sekunden, noch weiter bevorzugt von mindestens 60 Sekunden und höchst bevorzugt von mindestens 90 Sekunden vorgesehen.

Ein weiterer Vorteil der diskontinuierlichen Messung ist die Möglichkeit, die einzelnen Meßwertgeber nacheinander abzufragen. Das erleichtert die Zuordnung der Meßwerte und die Lokalisierung der Meßwerte zu den einzelnen Meßwertgebern. Die Steuerung der einander folgenden Abfragen ist so viel leichter als eine gemeinsame Abfrage aller Meßwertgeber, daß die Steuerung auch mechanisch erfolgen könnte. Vorteilhafterweise sind zeitgemäße elektronische Steuerungen so verbreitet und so preiswert, daß sie auch für einfache Steuerungsvorgänge Anwendung finden können.

Mit den elektronischen Steuerungen kann zugleich errechnet werden, ob die Zahl und Art der verwendeten Spannmittel für die Ladungssicherung bei richtiger Spannung ausreichend sein kann, wenn das Gewicht der Ladung eingegeben wird. Für solche Rechnungen eignen sich zeitgemäße, entsprechend programmierte Chips. Die Kosten der Chips sind praktisch vernachlässigbar. Die notwendigen Rechnungen sind bekannt. Deren Umsetzung in ein geeignetes Programm ist eine Einmalleistung, weil das Programm in jeden geeigneten Chip einprogrammiert werden kann.

Unabhängig von der Rechnung und unabhängig von der Umsetzung der Rechnung in ein Programm besteht nach der Erfindung empirischer Weg für die Ermittlung der richtigen Art und Zahl von Spannmitteln. Nach der Erfindung muß nicht abgewartet werden, bis die zulässige Höchstspannung der Spannmittel erreicht und/oder überschritten wird. Dann befindet sich der Fahrer schon in einer konkreten Gefahrensituation, in der es zu spät sein kann, um anzuhalten und die Ladungssicherung zu verbessern.

Nach der Erfindung kann dem Fahrer auch vor Erreichen der konkreten Gefahrensituation eine Vorwarnung gegeben werden. Der Vorwarnung liegt die Überlegung zugrunde, daß es bestimmte Fahrsituationen gibt, bei denen die vorkommenden Belastungen für das Fahrzeug und die Ladung ein Indiz dafür sind, welche Belastungen auf die Spannmittel zukommen, wenn sich extreme Gefahrenlagen konkretisieren. Mit den Belastungen sind insbesondere die Bremslasten gemeint. Die Bremslasten sind von der Geschwindigkeit abhängig, aus der das Fahrzeug in einer bestimmten Zeit zum Stillstand oder zu einer verringerten Geschwindigkeit kommen soll. Wahlweise wird das Fahrzeug dazu auf die bestimmte Geschwindigkeit gebracht und danach eine kontrollierte Bremsung unter Messung der Spannung in den Spannmitteln eingeleitet. Auf dem gleichen Wege kann die bei Höchstgeschwindigkeit und entsprechender Bremsung zum Stillstand oder zur gleichen verringerten Geschwindigkeit auf tretende Bremslast ermittelt werden. Die beiden gemessenen Spannungen liegen auf einer Spannungskurve (die sich durch eine Vielzahl solcher Bremsvorgänge aus unterschiedlichen Geschwindigkeiten bestimmen läßt), auf der sich ablesen läßt, ob die bei bestimmter Geschwindigkeit gemessenen Spannungswerte für die Geschwindigkeit und für die verwendeten Spannmittel bei Erhöhung der Geschwindigkeit auf Höchstgeschwindigkeit noch im zulässigen Rahmen liegen oder darüber hinausgehen.

Bei der gewählten Bremsung kommt es nicht auf eine Notbremsungen an, sondern kann auch eine durchschnittliche Bremsung als Referenzbremsung gewählt werden, wie sie im Stadtverkehr bei einer Geschwindigkeitsbegrenzung von 50 km pro Stunde vorkommt.

Übersteigt die Belastung der Spannmittel dann das oben ermittelte Maß der Referenzbremsung, so muß der Fahrer anhalten und weitere Spannmittel zur Reduzierung der Belastung einsetzen.

Vorzugsweise sind die Meßvorrichtungen mit mindestens einem akustischen und/oder optischen Signalgeber verbunden, der den Fahrer/ Fahrzeugführer/Schiffsführer/Flugzeugführer informiert, wenn die Spannung der Zurrmittel ein Mindestmaß unterschreitet und/oder ein Höchstmaß überschreitet. Hinzu kommen können weitere Signalgeber für eine Vorwarnung. Zum Beispiel sind in Anlehnung an die Ampellichter im Straßenverkehr grüne Lichter für die Anzeige einer ordnungsgemäßen Spannung in den Spannmitteln, gelbe Lichter für eine Vorwarnung gegen Überschreiten eines oberen Grenzwertes bzw. Unterschreiten eines unteren Grenzwerte und rote Lichter für die Anzeige des Überschreitens eines oberen Grenzwertes und Unterschreiten eines unteren Grenzwertes von Vorteil.

Noch weiter bevorzugt ist der akustische und/oder optische Signalgeber einstellbar. Das heißt, die Grenzwerte für die Kontaktgabe an den Signalgeber sind einstellbar. Das wird nach der Erfindung zur Anpassung an die Beschaffenheit der Zurrmittel und gegebenenfalls zur Anpassung an die Ladung genutzt. Jedes Zurrmittel hat eine Belastungsgrenze. Diese Belastungsgrenze/maximale Spannung der Zurrmittel kann leicht überschritten werden, wenn zum Beispiel von vier erforderlichen Zurrmitteln zwei Zurrmittel aufgrund von fehlerhafter Ladungssicherung ausfallen. Die Unfallgefahr und die Schadensgefahr sind dann fast greifbar.

Darüber hinaus kann die Ladung auch niedrigere Belastungsgrenzen vorgeben. Die Mindestspannung für die Zurrmittel kann von Art und Umfang der Beladung abhängig sein.

Die Art der Einstellung der Mindestspannung und der Maximalspannung kann verschieden sein. In Betracht kommen Einstellungen nach Art einer Drehpotentiometer-Einstellung oder nach Art einer Schiebepotentiometer-Einstellung. Es kann auch die Einstellung mittels einer Zahlentastatur oder einer Buchstabentastatur oder mittels Druckknöpfen erfolgen, welche die für bestimmte Spannungen stehen.

Die Meßvorrichtung kann Bestandteil des Fahrzeugzeuges oder Bestandteil der Zurrmittel sein. Die Meßvorrichtung kann auch ein separates Teil sein. Die herkömmlichen Zurrmittel ergeben in Kombination mit erfindungsgemäßen Meßvorrichtungen erfindungsgemäße Zurrmittel. Es kann zu diversen Kombinationen mit herkömmlichen Zurrmitteln kommen. Will man alle Zurrmittel mit Meßvorrichtungen versehen und eine große Zahl von Zurrmitteln vorhalten, so ergibt sich eine entsprechend hohe Zahl von Meßvorrichtungen bzw. erfindungsgemäß ausgebildeter Zurrmittel. Dieser Aufwand kann durch separate Meßvorrichtungen reduziert werden, die jeweils mit herkömmlichen Zurrmitteln kombiniert werden, da nicht alle Zurrmittel gleichzeitig in Gebrauch sind.

Weitere Vorteile können sich ergeben wenn die Meßvorrichtungen an den Befestigungspunkten für die Zurrmittel im Fahrzeug vorgesehen sind.

Von Vorteil ist auch, wenn die Meßvorrichtungen an die Stromversorgung des Fahrzeuges angeschlossen werden können und sich keine Batteriefrage stellt. Allerdings muß dann auch berücksichtigt werden, daß die Krafteinleitung in die Befestigungspunkte je nach Ladung und Anordnung der Zurrmittel immer anders ist. Für solche Fälle sind mehrachsige Kraft/Momentensonsoren geeignet, die sowohl Kräfte als auch Momente in den mehreren Achsen erfassen. Mit einem 6-achsigen Kraft/Momentensensor können Kräfte und Drehmomente in allen drei Raumrichtungen erfaßt werden. Dazu ist vorzugsweise ein geeigneter Träger (zum Beispiel ein Stahlteil) mit sechs oder mehr Dehnungsmeßstreifen versehen, welche die Verformung des Trägers erfassen.

Die Spannungsmessung vereinfacht sich umso mehr je einfacher die Spannung verläuft. In dem Sinne minimiert sich der Aufwand, wenn die zu messende Spannung lediglich geradlinig in Richtung des Zurrmittels verläuft.

Die Dehnungsmeßstreifen reagieren auf Verformungen im Mikrometerbereich. Diese Verformungen werden über eine Kalibrationsmatrix mit Hilfe geeigneter Soft- und Hardware in Spannungen/Kräfte umgerechnet.

Wahlweise sind separate Meßvorrichtungen in Form von Meßgliedern vorgesehen, die zwischen Zurrmittel und Befestigungspunkten am Fahrzeug und/oder zwischen zwei Zurrmitteln angeordnet werden können und allein die Spannkraft in Richtung des Verlaufes des zugehörigen Zurrmittels ermitteln. Das vereinfacht die Messung beträchtlich. Außerdem vereinfacht sich die Auswertung der Meßwerte.

Die Meßglieder können unterschiedliche Form aufweisen. Die Meßglieder können als Haken oder Ösen ausgebildet sein, in Abhängigkeit von der Form der korrespondierenden Befestigungspunkte am Fahrzeug und in Abhängigkeit von der Form der korrespondierenden Enden der Zurrmittel. Von Vorteil sind Meßglieder mit auswechselbaren Enden, so daß die Meßglieder den Befestigungspunkten am Fahrzeug und den korrespondierenden Enden am Zurrmittel angepaßt werden können. Das heißt, die Meßglieder können nach Wahl mit Haken und/oder Ösen oder anderen Enden versehen werden. Das schließt je nach Zurrmittel und Befestigungspunkten auch unterschiedliche Haken und/oder Ösen und/oder sonstige Enden ein.

Zur Auswechselung ist im einfachsten Fall eine Schraubverbindung zwischen der Meßvorrichtung und den Haken und/oder Ösen und sonstigen Enden vorgesehen.

Wahlweise kommen auch Mischformen vor, bei denen die Meßvorrichtung zum Beispiel mit Ösen versehen ist und bei Bedarf separate Haken oder sonstige Verbindungsmittel mit den Ösen verbunden werden.

Vorzugsweise bestehen die Meßglieder zwischen den vorstehend beschriebenen Enden aus einem Stahlkörper/Träger/Gehäuse und einem daran oder darin angeordneten Dehnungsmeßstreifen.

Günstig ist, die Meßglieder in dem Bereich, in dem sich die Dehnungsmeßstreifen befinden, mit einem Schutz zu versehen. Der Schutz kann durch eine nachgiebige Schicht und/oder durch eine feste Schicht gebildet werden. Die nachgiebige Schicht kann aus nachgiebigem Kunststoff bestehen. Geeigneter Kunststoff ist zum Beispiel Silicon. Die feste Schicht kann aus festem Kunststoff oder aus Metall bestehen. Es können auch Verbundschichten aus unterschiedlichen Materialien zum Einsatz kommen. Die Schutzschicht kann die Meßglieder gehäuseartig umgeben.

Bei Meßgliedern mit Dehnungsmeßstreifen findet eine indirekte Kraftmessung statt. Das heißt, es wird die Kraft mittelbar über die Dehnung oder Stauchung des Stahlkörpers/Trägers/Gehäuses gemessen. Zur genauen Messung empfiehlt sich eine Kalibrierung der Vorrichtung im eingebauten Zustand des Dehnungsmeßstreifens. Der Dehnungsmeßstreifen beinhaltet eine Messung des elektrischen Widerstandes bei Dehnung. Der elektrische Widerstand ändert sich bei Dehnung. Bei Metall-Dehnungsmeßstreifen erhöht sich der Widerstand. Es gibt aber auch Halbleiter-Dehnungsmeßstreifen, deren Widerstand sich bei Dehnung erhöht.

Die indirekte Kraftmessung erlaubt auch den Einsatz anderer Meßsysteme, zum Beispiel die Verformungsmessung mittel seines Tauchankers. Durch Verschiebung des Tauchankers ändert sich die Induktion mit dem Tauchanker. Ein anderes Beispiel ist die Kraftmessung mittels zweier Kondensatorplatten. Durch die Verformung des Stahlkörpers/Trägers/Gehäuses wird der Abstand der Kondensatorplatten geändert. Dadurch ändert sich die Kapazität.

Anstelle der elektrischen Widerstandsmessung ist auch eine Kraftmessung unter Anwendung magnetischer Werkstoffe möglich (Ausnutzung des magnetoelastischen Effekts). Durch Änderung der auf einen magnetischen Werkstoff wirkenden Kraft ändert sich die magnetische Permeabilität. Es ändert sich der von einer primären Spule auf eine sekundäre Spule wirkende Kraft.

Anstelle der elektrischen Widerstandsmessung ist auch eine Kraftmessung unter Verwendung eines Piezokeramik-Elementes möglich. Piezokeramik hat die Eigenschaft einer Formänderung nach Änderung anliegender elektrischer Spannung. Das kann umgekehrt werden. Durch Änderung der außen anliegenden Kraft ändert sich die Spannung.

Das bekannteste Piezokeramik-Element ist der Silizium-Drucksensor.

Dabei findet vorzugsweise ein Siliziumsubstrat in Form einer dünnen Scheibe Anwendung. In die Scheibe sind vier Dehnungsmeßstreifen eingearbeitet, die bei Druck gedehnt bzw. gestaucht werden. Auf Stauchung reagieren alle Dehnungsmeßstreifen mit Widerstandsänderung, allerdings zwei der Dehnungsmeßstreifen anders als die beiden anderen Dehnungsmeßstreifen, und zwar gegensätzlich. Das heißt, auf Druckerhöhung reagieren die einen Dehnungsmeßstreifen mit Erhöhung des ohmschen Widerstandes, die anderen Dehnungsmeßstreifen mit Reduzierung des ohmschen Widerstandes. Das erleichtert die Messung der Unterschiede.

Die verschiedenen Dehnungsmeßstreifen bilden eine Wheatstonesche Brücke. Die Wheatstonesche Brücke vergrößert die Differenz noch, indem sie die in gleich gerichteten Widerstandsänderungen addiert. Außerdem kann die Differenz noch durch einen Meßverstärker vergrößert werden.

Anstelle der separaten Meßglieder zwischen den Enden der Zurrmittel und den Anschlagpunkten am Fahrzeug können auch Meßglieder zum Einsatz kommen,
welche Bestandteil der Zurrmittel, insbesondere Bestandteil der
Endbeschläge sind oder
welche auf die Zurrmittel aufgesetzt sind oder
welche an den Anschlagpunkten des Fahrzeuges angeordnet sind oder
welche Bestandteil der Anschlagpunkte sind.

Die Meßglieder, welche Bestandteil der Zurrmittel oder Bestandteil der Anschlagpunkt am Fahrzeug/Schiff/Flugzeug sind, besitzen vorzugsweise das gleiche Meßsystem wie die Meßglieder, welche zwischen dem Zurrmittel und dem Anschlagpunkt am Fahrzeug vorgesehen sind. Das gleiche gilt für die Meßglieder, welche auf den Zurrmitteln aufgesetzt sind bzw. auf den Anschlagpunkten am Fahrzeug/Schiff/Flugzeug angeordnet sind.

Die aufgesetzten Meßglieder können unterschiedlich gestaltet sein und von unterschiedlicher Wirkungsweise sein. Es kann sich um Meßglieder handeln, welche auf den Zurrmittel im wesentlichen eine meßbare Dehnung und/oder eine meßbare Zusammendrückung erfahren. Es kann sich auch um Meßglieder handeln, welche auf dem Zurrmittel im wesentlichen eine meßbare Biegung erfahren. Die Messung der Biegung kann mit den gleichen Mitteln wie bei der Messung der Dehnung erfolgen. Gegebenenfalls werden mehrere Dehnungsmeßstreifen oder dergleichen Meßmittel zum Einsatz gebracht. Das gilt besonders für Verformungen des Meßgliedes, welche im wesentlichen zweidimensionalen oder sogar dreidimensionalen Charakter haben.

Besonders vorteilhaft ist eine lediglich geradlinige Verformung der Meßglieder.

Zur Dehnungsmessung können die Meßglieder auf ein Zurrmittel aufgesetzt und an den Enden an dem Zurrmittel verklemmt werden, so daß eine Dehnung des Zurrmittels sich auf den Dehnungskörper des Meßgliedes überträgt. Bei Belastung des Zurrmittels kann über die Dehnung des Meßgliedes die Belastung des Zurrmittels gemessen werden.

Mit aufgesetzten Meßgliedern kann auch eine Biegungsmessung stattfinden und über die Biegungsmessung eine Kraftmessung stattfinden.

Für eine Biegungsmessung kann zum Beispiel ein Rahmen Einsatz finden, dessen Breite größer als die Breite des Zurrmittels ist, so daß ein Zurrmittel im ungespannten Zustand durch den Rahmen hindurchgedrückt werden kann. Dabei bildet das Zurrmittel einen in den Rahmen hineinragenden Bogen. In den Bogen kann ein Bolzen eingelegt werden, der das Zurrmittel zunächst hindert, den Bogen wieder aufzulösen. Der Bolzen kann beliebigen Querschnitt aufweisen, vorteilhafterweise ist die Berührungsfläche des Bolzens mit dem Zurrmittel gerundet.

Mit zunehmender Spannung des Zurrmittels wird der Bogen etwas mehr gerade und verbiegt sich der Rahmen. Diese Biegung kann in der oben beschriebenen Weise gemessen und für die Kraftmessung genutzt werden. Bei Verwendung von Dehnungsmeßstreifen für die Kraftmessung können die Dehnungsmeßstreifen in dem Biegesystem des Rahmens an der Seite angeordnet werden, an der Zugspannungen, vorzugsweise die größten Zugspannungen, auftreten. Durch Kalibrieren wird dem Umstand Rechnung getragen, daß die Dehnung systembedingt nicht proportional der Spannkraft im Zugmittel verläuft. Kalibrieren heißt, daß dem jeweiligen Biegezustand des Rahmens eine richtige Spannung im Zurrmittel zugeordnet wird. Das Kalibrieren kann sehr genau empirisch erfolgen.

Wahlweise können in dem vorstehenden erläuterten Rahmen der Meßvorrichtung auch mehrfache Bögen/Biegungen des Zurrmittels erzeugt werden. Dazu sind Rahmen mit entsprechender Länge und eine entsprechende Zahl von Bolzen vorgesehen.

Anstelle des vorstehend erläuterten Rahmens der Meßvorrichtung kann auch ein gabelartiges Meßglied mit mindestens drei Zinken zum Einsatz kommen. Zum Aufsetzen des Meßgliedes wird das Zurrmittel an der vorgesehenen Stelle für das Meßglied im ungespannten Zustand in eine Wellenform gebracht, so daß das Meßglied leicht auf das Zurrmittel gesteckt werden kann. Anschließend reicht ein Strammziehen des Zurrmittels von Hand , um eine geringe Spannung im Zugmittel zu erzeugen, bei der das Meßglied nicht mehr von dem Zurrmittel abfallen kann. Dem festen Halt eines gabelförmigen Meßgliedes auf dem Zurrmittel ist auch förderlich, wenn die Zinken mit einer rauen Oberfläche versehen sind und/oder an den Enden der Zinken mit einer Verdickung versehen sind, insbesondere mit einer scheibenförmigen Verdickung, welche das Meßglied an einem Abgleiten von dem Zurrmittel hindern.

Nach der Erfindung sind alle Meßvorrichtungen/Meßglieder zugleich als Sender ausgebildet oder mit einem Sender verbunden, der die Meßwerte einem Empfänger im Führerhaus des Lkw oder in die Kommandobrücke eines Schiffes oder in das Cockpit eines Frachtflugzeuges oder in den Führerstand einer Lokomotive übermittelt.

Wenn die Meßwerte verschiedener Meßvorrichtungen/Meßglieder gleichzeitig weitergegeben werden, werden die Meßwerte nach der Erfindung vom jeweiligen Sensor so verschlüsselt, daß sie vom Empfänger dem richtigen Meßwertgeber zugeordnet werden können. Das heißt, beim Empfängerfindet eine Dekodierung der empfangenen Daten statt, bevor eine Auswertung der Daten erfolgen kann.

Die Daten können kabelgebunden oder drahtlos übermittelt werden.

Die kabelgebunde Datenübertragung ist technisch zumeist einfacher. Bei der Datenübertragung mittels Kabel werden die Kabel von der Fahrerkabine aus zu den einzelnen Meßstellen verlegt und umgekehrt. Günstig ist dabei, wenn zu allen potentiellen Meßstellen Kabel führen und dort in ein Steckerteil enden, so daß bei Bedarf dort eine Meßvorrichtung angeschlossen werden kann. Der Anschluß/Verbindung erfolgt mit einem anderen passenden Steckerteil.

Die zu allen potentiellen Meßstellen führenden Kabel können fest angeordnet werden. Dabei sind die verschiedenen Kabel vorzugsweise in sogenannten -Kabelbäumen zusammen gefaßt werden.

Es können auch mehradrige Kabel und mehrpolige Stecker zur Anwendung kommen, die eine Verbindung der Fahrerkabine mit verschiedenen Meßvorrichtungen erlauben.

Soweit die potientiellen Meßstellen dicht beieinander liegen, können einzelne Leitungen für verschiedene dicht beieinander liegenden Meßstellen bestimmt sein. Das wird zum Beispiel mit entsprechend beweglichen Leitungsenden erreicht. Alternativ oder zusätzlich können an den Meßvorrichtungen/Meßgliedern entsprechend bewegliche Leitungen mit ausreichender Anschlußlänge vorgesehen sein, so daß die an den Meßvorrichtungen vorgesehenen Leitungen mit den ausgewählten Leitungen am Fahrzeug verbunden werden können.

Das bekannteste kabelgebundene Datenübertragungssytem trägt die Kurzbezeichnung USB. Es gibt noch diverse andere kabelgebunde Datenübertragungssysteme, zum Beispiel FireWire, Serial ATA, ATA/ATAPI(IDE), SCSI, Thunderbolt.

Am Markt werden solche Datenübertragungssysteme unter diversen Produktbezeichnungen angeboten.

Wahlweise ist ein drahtloses Datenübertragungssystem vorgesehen.

Wegen der geringen Entfernung zwischen den Sensoren zur erfindungsgemäßen Datenübertragung an den Fahrer/Führer/Flieger wäre es zwar möglich, einfache Sender und Empfänger zu verwenden. Wegen der notwendigen Vielzahl von Sendern und Empfändern ist jedoch eine aufwendige Verschlüsselung der Meßdaten und deren Entschlüssung am bzw. im Empfänger erforderlich, um alle Signale dem richtigen Meßwertgeber zuzuordnen und eine entsprechende Auswertung vornehmen zu können.

Vorzugsweise werden deshalb vorhandene Systeme genutzt, die eine Verschlüsselungstechnik und Entschlüsselungstechnik anbieten.

Nachfolgend sind einige drahtlose Datenübertragungssystem aufgelistet, die für die erfindungsgemäße Meßwertübertragung geeignet sind:
GPRS. Dieser Dienst ist ein paketorientierter Dienst zur Datenübertragung in GSM-Netzen. Das GSM ist ein bekanntes Mobilfunknetz.
EDGE. Dieses Netz beinhaltet eine Weiterentwicklung des GSM-Netzes
DECT. Dieses Netz ist für geringe Reichweiten von 30 bis 50m sehr geeignet. Es findet bislang vorzugsweise in Schnurlos-Telephonen in Gebäuden Anwendung.
UMTS ist ein sehr bekanntes Mobilfunknetz
HSDPA beinhaltet eine Weiterentwicklung des UMTS-Netzes und wird von verschieden Mobilfunkanbietern betrieben
DRM. Dieses Netz basiert auf einem Rundfunksystem.
BGAN
DMB. Dieses Netz basiert auch auf einem Hörfunksystem.
Bluetooth. Dieses Netz ist zur industriellen Datenübertragung auf
Kurzer Entfernung übermittelt worden.
DVB-T. Dieses Netz basiert auf einem Fernsehnetz
DVB-S. Dieses Netz basiert auf einem Satellitenfernsehnetz
WiMAX. Dieses Netz basiert auf dem WLAN-Netz
LVE. Dieses Netz basiert auf einem Mobilfunknetz
WLAN. Dieses beinhaltet lokale Funknetze.
ZigBEE. Es handelt sich um Funknetze für kurze Entfernungen bis zu 100m.

Vorzugsweise ist der Signalempfänger mit einem optischen und/oder akustischen Warnsignalgeber verbunden. Der Signalgeber macht die Verantwortlichen/Fahrer/Schiffsführer/Lokomotivführer/Piloten sofort auf eine nachlassende Vorspannung der Zurrmittel bzw. übermäßig steigende Spannung in den Zurrmitteln und auf eine Gefahr für die Ladung/Fahrzeug/Schiff/Flugzeug aufmerksam. Noch weiter bevorzugt wird zugleich angezeigt, an welcher Meßvorrichtung das Unterschreiten der Mindestspannung und das Überschreiten der Maximalspannung bzw. eine Vorwarnung registriert worden ist. Es kann dann ohne nachteilige Verzögerung das richtige Zurrmittel nachgespannt werden bzw. ein ergänzendes Zurrmittel zum Einsatz gebracht werden, wenn eine übermäßige Spannung angezeigt wird. Beim Lkw-Transport kann der Lkw-Fahrer sofort anhalten und durch Nachspannen oder durch Anbringung ergänzender Zurrmittel der entstandenen Transportgefahr entgegenwirken. Es muß nicht mehr gewartet werden, bis ein Lkw-Fahrer seine vorgeschriebene Pause macht. Es muß auch nicht mehr gehofft werden, daß der Lkw-Fahrer während der Pause die Ladung kontrolliert, soweit er kann.

In der Zeichnung ist ein Ausführungsbeispiel der Erfindung dargestellt.

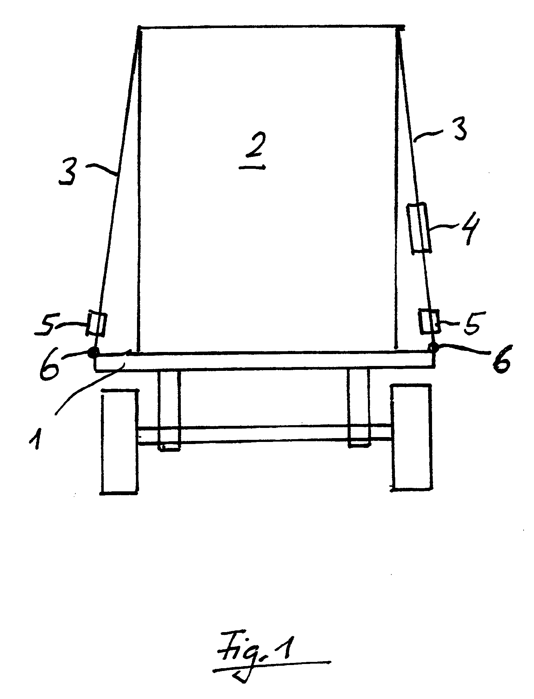

Fig. 1 zeigt ein Fahrzeug 1 mit einer kastenförmigen Ladung 2. Die Ladung 2 wird mit mehreren Spanngurten gesichert, von denen ein Spanngurt 3 schematisch dargestellt ist. Der Spanngurt 3 ist bei 6 an das Fahrzeug angeschlagen. Der Spanngurt 3 wird mittels einer Spanneinrichtung 4 gespannt. Die Spanneinrichtung besitzt einen Spannhebel und eine Ratsche. Die dargestellte Anordnung ist üblich, Dabei ergeben sich aufgrund der Reibungsverhältnisse zwischen Ladung 2 und Spanngurt 3 in den verschiedenen Abschnitten des Spanngurtes unterschiedliche Spannungen. Wichtig ist, daß in dem der Spanneinrichtung 4 entferntesten Abschnitt eine ausreichende Spannung besteht. Die Spannungen am Übergang des Spanngurtes 3 in die Befestigungsstellen 6 an dem Fahrzeug 1 wird mittels Kraftsensoren 5 gemessen. Bei den Kraftsensoren 5 handelt es sich um Stahlkörper, die an einem Ende eine Öse zum Eingriff der Endbeschläge des Spanngurtes 3 bilden und am anderen Ende im Befestigungspunkt 6 an das Fahrzeug 1 angeschlagen sind. Der Endbeschlag des Spanngurtes 3 besteht im Ausführungsbeispiel aus einem Haken, der in die Öse am Kraftsensor 5 eingreift. Der Kraftsensor 5 greift seinerseits mit einem Haken, welcher dem Haken an dem Spanngurt entspricht, in eine Öse am Fahrzeug 1, welche der Öse am Kraftsensor 5 entspricht.

Die Druckmessung erfolgt mit Dehnungsmeßstreifen an den Stahlkörpern.

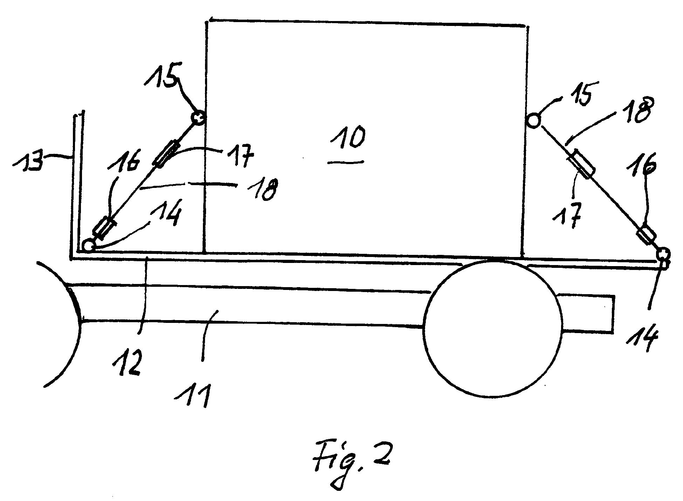

Fig. 2 zeigt einen Lkw als Fahrzeug 11 mit einer anderen üblichen Beladung. Bei dieser Beladung wird die Belastungsfähigkeit des Lkw optimal ausgenutzt. Das bedingt eine Anordnung der Ladung 10 im Abstand von der Stirnwand 13 der Ladefläche 12 dicht an bzw. auf der Hinterachse des Lkw. Die Ladung 10 wird mit Spanngurten 18 gehalten. Die Spanngurte 18 werden wie die Spanngurte 3 nach Fig. 1 gespannt. Die Spanngurte 18 sind aber mittig an die Ladung angeschlagen. Dazu sind Befestigungspunkte 15 an der Ladung vorgesehen. Die Befestigungspunkte 14 an der Ladefläche entsprechen den Befestigungspunkten 6 nach Fig. 1. Außerdem sind die verwendeten Spannmittel 17 der Spanngurte 18 gleich dem Spannmittel 4 nach Fig. 1. Desgleichen sind Kraftsensoren 16 vorgesehen, die gleich den Kraftsensoren 5 nach Fig. 1 sind.

Nach Fig. 2 müssen die Spanngurte die aus der Ladung 10 und dem Fahrbetrieb entstehenden Kräfte weitgehend aufnehmen. Dabei ist eine Vorspannung einzuhalten, damit sich die Kräfte möglichst gleichmäßig auf die verschiedene Spanngurte verteilen. Zugleich ist sicherzustellen, daß keine übermäßigen Kräfte auftreten. Dies wird mit den Kraftsensoren 16 kontrolliert.

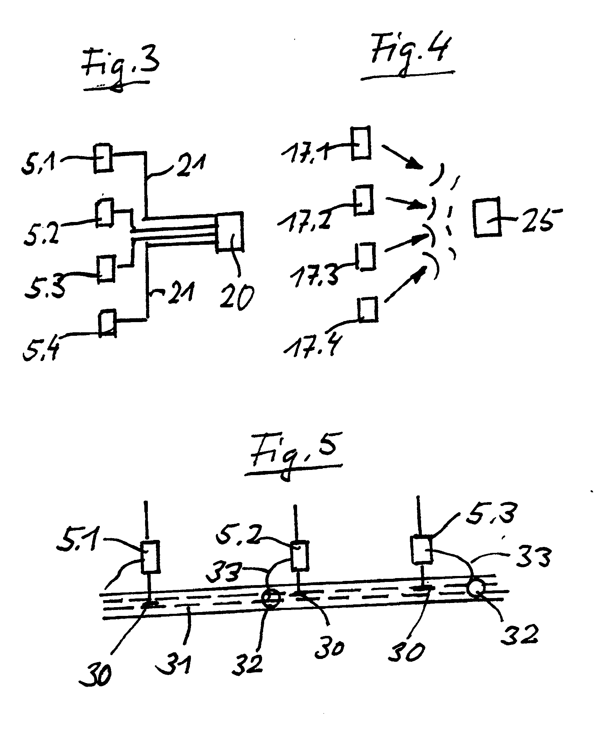

Fig. 3 zeigt vier verschiedene Kraftsenoren 5.1, 5.2, 5.3, 5..4, deren Meßwerte über USB-Kabel 21 an einen Kleinrechner 20 weitergeleitet werden, der im Führerhaus des Lkw angeordnet ist und die Meßwerte auf einem nicht dargestellten Display visualisiert. Außerdem ist der Kleinrechner mit einem optischen Signalgeber verbunden, der ein Alarmsignal gibt, wenn die Meßwerte ein Mindestmaß unterschreiten bzw. ein Maximalmaß überschreiten.

Fig. 5 zeigt die verschiedenen Kraftsensoren 5.1, 5.2, 5.3 in der Arbeitsstellung am Fahrzeug. Dabei sind in der Ladefläche des Fahrzeuges Halfenschienen eingelassen. Die Halfenschienen gleichen einem Kastenprofil, das in Längsrichtung mit einem Schlitz versehen ist, in dem Ankerschrauben verschoben werden können und durch Verschiebung in die gewünschte Position für einen Spanngurt bzw. für mehrere Spanngurte gebracht werden können. In der gewünschten Position findet eine Verspannung der Schrauben in den Schienen statt. Die Ankerschrauben sind zugleich mit den Kraftsensoren verbunden; die Kraftsensoren mit den zugehörigen Spanngurten.

Fig. 4 zeigt vier verschiedene Kraftsensoren 17.1, 17.2, 17.3, 17.4, welche drahtlos, durch Funk die Meßwerte an einen Empfänger und Kleinrechner 25 übermitteln. Der Kleinrechner 25 hat die gleichen Funktionen wie der Kleinrechner 20 nach Fig. 3.

Fig. 6 zeigt eine Meßvorrichtung, die aus einem Rahmen und einem Kraftmeßsensor 45 besteht. Der Rahmen ist aus zwei Seitenwangen 43 und Bolzen 41 und 42 zusammen gesetzt. Die beiden Bolzen 41 und 42 sind an den Enden der Seitenwangen 43 angeordnet.

Der Rahmen wird zur Montage der Meßvorrichtung an beliebiger Stelle auf einen Spanngurt 40 aufgesetzt. Der Spanngurt muß dabei noch locker/ungespannt sein. Das ist Voraussetzung, um den Spanngurt 40 so weit durch den Rahmen durchdrücken zu können bis ein weiterer Bolzen 44 mittig zwischen den beiden Bolzen 41 und 42 unter dem Spanngurt 40 zu positionieren. Der Spanngurt 40 ist dann im Bogen durch den Rahmen geführt. Beim Spannen versucht der Spanngurt 40 eine gerade Linie einzunehmen und den Bogen auszuziehen. Dadurch wird über die Bolzen 41,42,44 ein Biegemoment auf den Rahmen ausgeübt. In der Ansicht entstehen dabei an der Unterseite des Rahmens Zugspannungen. Deshalb ist an der Unterseite ein Dehnungsmeßstreifen vorgesehen und mit einem Schutzgehäuse versehen.

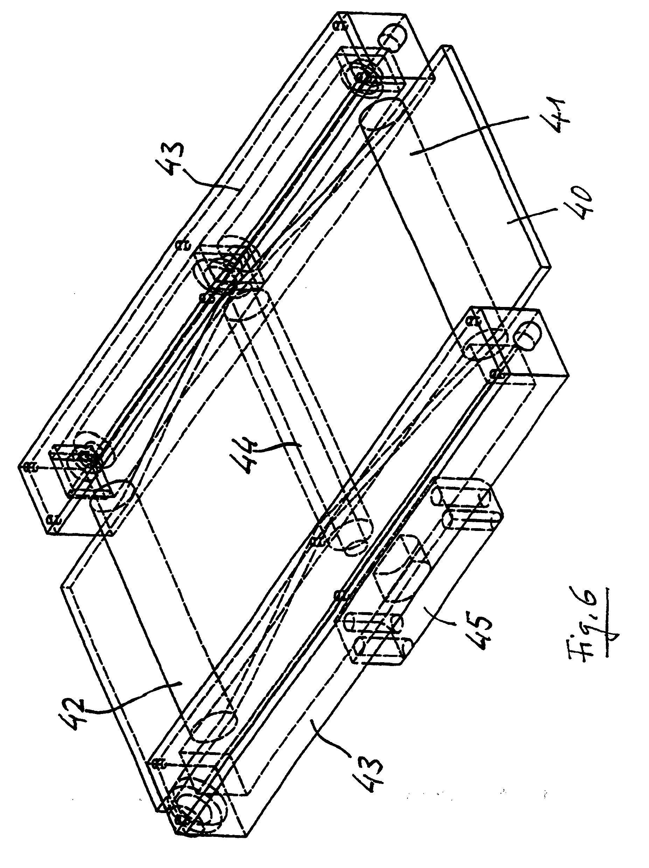

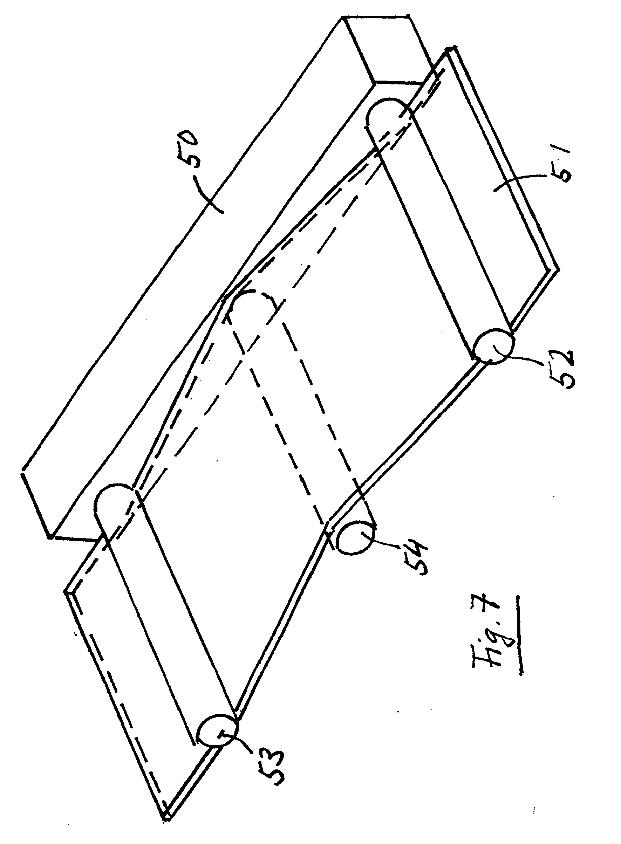

Fig. 7 zeigt eine gabelförmige Meßvorrichtung mit einer Basis 50 und drei fest an der Basis angeordneten Zinken52, 53 und 54. Die Zinken entsprechen den Bolzen 41, 42, 44 nach Fig. 6. Die Meßvorrichtung läßt sich an jeder gewünschten Stelle eines Spanngurtes seitlich auf den lockern, ungespannten Spanngurt 51 schieben. Vorher wird der Spanngurt von Hand in die gleiche Wellenform/Bodenform wie nach Fig. 6 in dem Spanngurt gebracht; nach dem Aufschieben der Meßvorrichtung wird das Zurrmittel von Hand stramm gezogen, so daß die Meßvorrichtung weder herunterfallen noch verrutschen kann.

Beim Spannen des Spanngurtes entstehen ähnliche Biegekräfte an der Basis 50, die sich mit einer gleichartigen Meßvorrichtung wie nach Fig. 6 messen lassen.

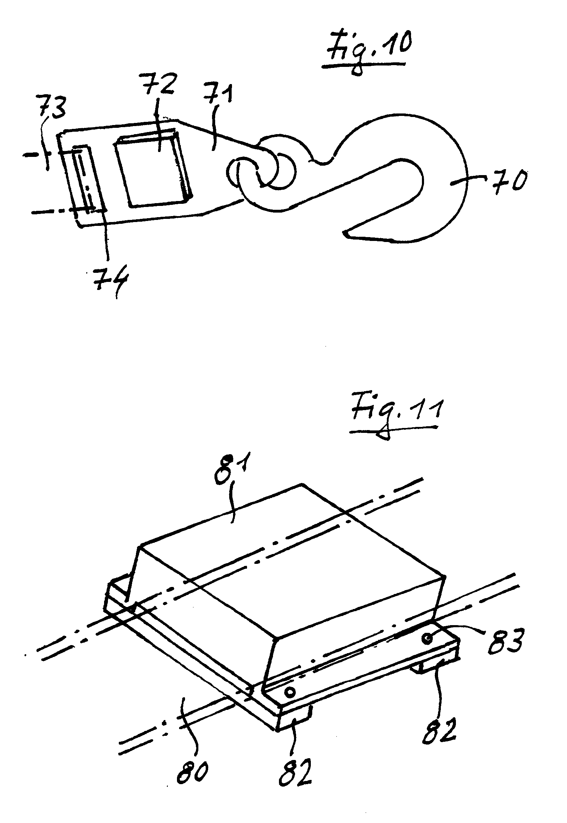

Fig. 11 zeigt ein weiteres Ausführungsbeispiel mit einer auf einen Spanngurt 80aufsetzbaren Meßvorrichtung 81. Die Meßvorrichtung besteht aus einem Gehäuse mit darin eingeschlossenem Dehnungsmeßstreifen und liefert die Meßwerte drahtlos an einen Empfänger im Führerhaus des Lkw. Dort werden die Meßwerte mit Mindestwerten und maximalen Werten verglichen. Die gemessenen Werte sind Dehnungswerte, die durch Belastung des Spanngurtes 80 mit definierter Zugkraft festgelegt werden. Dies wird als Kalibrieren bezeichnet.

Die angelegten Zugkräfte führen zu einer Dehnung des Gehäuses der Meßvorrichtung 81, weil das Gehäuse mit zwei Bügeln auf dem Spanngurt 80 verklemmt ist, so daß sich die Dehnung des Spanngurtes 80 auf die Meßvorrichtung 81 überträgt.

Die Bügel 82 werden dazu im Ausführungsbeispiel mit nicht dargestellten Flügelschrauben an dem Gehäuse der Meßvorrichtung verschraubt. Die Flügelschrauben sind leicht ohne Werkzeug handhabbar und lassen sich schnell drehen.

Die Ausführungsbeispiele 9 und 10 unterscheiden sich von den Ausführungsbeispielen 6,7 und 11 dadurch, daß die Meßvorrichtung Teil des Spanngurtes ist.

Zu den Spanngurten gehören auch die Endbeschläge, mit denen der Spanngurt am Tansportgut und/oder an dem Fahrzeug angeschlagen wird.

Das Ausführungsbeispiel 9 zeigt einen Palettenhaken als Endbeschlag für einen Spanngurt 64. Zu dem Palettenhaken gehört ein Grundkörper 60, der die Meßvorrichtung 61 trägt. Die Meßvorrichtung 61 besitzt ein Gehäuse mit dem ein an dem Grundkörper verklebter Dehnungsmeßstreifen umschlossen wird. Der Dehnungsmeßstreifen mißt die Dehnung des Grundkörpers unter Last. Unter Last greift der Palettenhaken mit entsprechender Zugkraft in eine Palette. In dem Gehäuse ist ein Senor untergebracht, mit dem die Meßwerte drahtlos an einen Empfänger im Fahrerhaus des Lkw.

Der Spanngurt 64 ist durch eine Öffnung 63 des Palettenhakens geführt.

Fig. 10 zeigt einen Spanngurt 73 mit einem Endbeschlag, der aus einem normalen Haken 70 und einem Zwischenglied 71 besteht. Das Zwischenglied 71 besteht aus Blech und trägt eine Meßvorrichtung 72. Die Meßvorrichtung besteht aus einem Gehäuse, einen Dehnungsmeßstreifen und einem Sensor zur drahtlosen Meßwertübertragung an einen Empfänger im Fahrerhaus des Lkw. Der Dehnungsmeßstreifen ist auf dem Blech des Zwischengliedes verklebt und mißt dessen Dehnung unter Last. Die Meßwerte werden von dem Sonsor drahtlos an den Empfänger im Fahrerhaus übermittelt. Das Gehäuse umgibt den Dehnungsmeßstreifen und die weitere Elektrik und Elektronik der Meßvorrichtung.

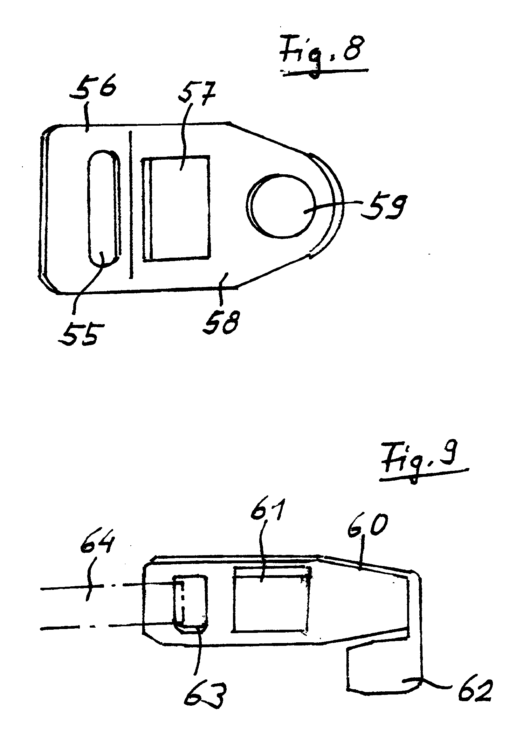

Der Spanngurt 73 ist durch eine Öffnung 74 im Zwischenglied 71 geführt. Dies ist eine Gemeinsamkeit mit dem Ausführungsbeispiel nach Fig. 9.

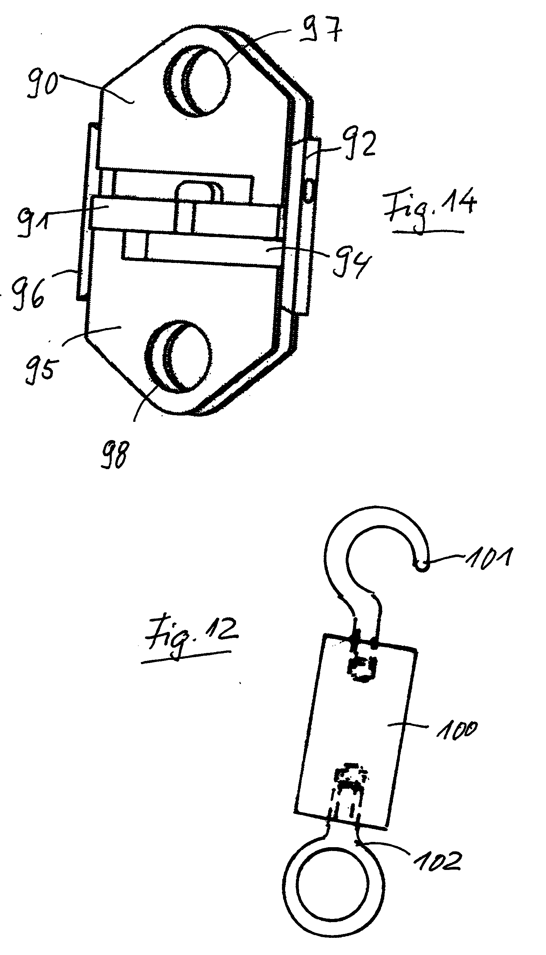

Fig. 14 zeigt ein zwischen dem Zurrmittel und dem Anschlagpunkt am Fahrzeug vorgesehenes Meßglied. Das Meßglied besteht aus zwei hakenförmig ineinander greifenden Teilen, zwischen denen ein nicht dargestelltes Piezo-Meßelement vorgesehen ist, das in der oben beschriebenen Weise auf Druck eine Verformung erfährt und eine anliegende Spannung verändert.

Das eine hakenförmige Teil des Meßgliedes setzt sich aus den Teilen 90,92 und 94 zusammen. Das andere hakenförmige Teil des Meßgliedes setzt sich aus Teilen 95, 96, 91. Jedes hakenförmige Teile ist mit einer Öffnung 97 bzw. 98 versehen. Im Ausführungsbeispiel greift ein Zurrmittel mit einem Endbeschlag in die Öffnung 97 und umfaßt das andere hakenförmige Teil mit der Öffnung 98 einen nicht dargestellten Bolzen eines Fahrzeugaufbaus, der den Anschlagpunkt am Fahrzeug bildet.

Fig. 12 zeigt ein weiteres, zwischen dem Zurrmittel und dem Anschlagpunkt vorgesehenes Meßglied. Diese Meßglied besitzt einen handelsüblichen Zylinder 100 mit einem eingeschlossenen Dehnungsmeßstreifen. Der Zylinder 100 ist an den Stirnflächen mit Schraubflächen versehen. Im Ausführungsbeispiel ist am einen Zylinderende ein Haken 101 und am anderen Zylinderende 102 eine Öse eingeschraubt. Der Haken 101 korrespondiert mit einem Zurrmittel, die Öse 102 mit einem Anschlagpunkt.

In anderen Ausführungsbeispielen sind anstelle des Haken 101 Ösen vorgesehen oder umgekehr anstelle der Ösen 102 Haken. Die Verschraubung erlaubt den Anschluß diverser unterschiedlicher Bauteile.

Fig. 8 unterscheidet sich von allen anderen Ausführungsbeispielen dadurch, daß ein L-förmiger Winkel aus Stahlblech am Aufbau des Lkw verschraubt ist. Der Winkel besitzt einen Schenkel 56 für die Verschraubung am Lkw-Aufbau. Zur Verschraubung ist in dem Schenkel 56 ein Langloch 55 vorgesehen. Der andere Schenkel 58 besitzt ein Öse 59, die zum Anschlagen eines Zurrmittels bestimmt ist. Dabei kann es sich um einen Spanngurt handeln, der mit einem als Haken ausgebildeten Endbeschlag in die Öse greift, oder um eine Spannkette handeln, die mit einem als Haken ausgebildeten Endbeschlag in die Öse greift.

Der zugehörige Schenkel 58 trägt eine Meßvorrichtung 57, die wie die Meßvorrichtungen 61, 72 ausgebildet ist.

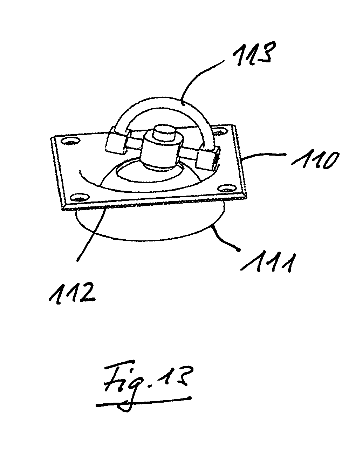

Fig. 13 zeigt einen Beschlag für einen Anschlagpunkt am Fahrzeugaufbau. Der Beschlag besitzt ein Blech 110, mit der Beschlag 110 an dem Fahrzeugaufbau verschraubt wird. An dem Blech 110 ist ein Blechzylinder 111 angeschweißt. In dem Blechzylinder 111 ist eine Blechaußenkalotte verschweißt, also fest angeordnet. Hinter der Blechaußenkalotte liegt eine bewegliche Blechinnenkalotte. Die beiden Kalotten sind handelsüblich für Kugelgelenke verfügbar und preisgünstig. In der Innenkalotte ist ein Bolzen verschraubt, an dem ein Bügel 113 gehalten ist. Der Bolzen ragt dabei durch eine Öffnung der Außenkalotte 112 vor. Die Abmessungen des Bügels 113 sind größer als die Öffnung in der Außenkalotte, so daß die Innenkalotte nicht abfallen kann. Aufgrund der in der Außenkalotte 112 gleitenden Innenkalotte kann sich der Beschlag in weiten Grenzen auf jede Zugrichtung des Zurrmittels einstellen, so daß in einem sich anschließenden Meßglied allein Spannungen in Zugrichtung auftreten und eine vereinfachte Messung erfolgen kann.

In anderen Ausführungsbeispielen erfolgt der Anschluß eines Meßgliedes an den Anschlagpunkt mittels eines oder mehrerer Kettenglieder.

Alle drahtlos arbeitenden Meßvorrichtungen sind in den Ausführungsbeispielen batteriebetrieben.

## Patentansprüche

1. Ladungssicherung bei Transportvorgängen im Straßenverkehr, Eisenbahnverkehr, Flugverkehr und Schiffsverkehr,
wobei Zurrmittel für die Ladungssicherung verwendet werden,
**gekennzeichnet durch** mindestens einen Kraftsensor zur Messung der Spannkraft der Zurrmittel, wobei der Kraftsensor über eine Leitung oder drahtlos mit einem Empfänger und Auswerteeinheit verbunden ist, der dem Transportpersonal mindestens bei der Fahrt oder Flug mindestens ein Unterschreiten einer einstellbaren Mindestspannung der Zurrmittel und/oder mindestens ein Überschreiten einer einstellbaren maximalen Spannung der Zurrmittel anzeigt, so daß sofort Gegenmaßnahmen gegen die mit dem Unterschreiten der Mindestspannung und Überschreiten der Maximalspannung verbundene Transportgefahr getroffen werden können.

2. Ladungssicherung nach Anspruch 1,
**gekennzeichnet durch** eine optische und/oder akustische Signaleinrichtung.

3. Ladungssicherung nach Anspruch 1 oder 2,
gekennzeichnet
a)durch Zurrmittel mit Kraftsensoren versehen, die zugleich Bestandteil der Zurrmittel sind oder
b)durch separate Kraftsensoren, die an den Zurrmitteln angeordnet sind oder
c)durch separate Kraftsensoren, die als Zwischenglieder zwischen den Zurrmitteln und den Anschlagpunkten am Fahrzeug angeordnet sind.
d)durch Kraftsensoren, die zugleich Bestandteil der Anschlagpunkt am Fahrzeugaufbau für die Zurrmittel sind oder
e)durch Kraftsensoren, die am Anschlagpunkt am Fahrzeugaufbau für die Zurrmittel angeordnet sind.

4. Ladungssicherung nach Anspruch 3,
**dadurch gekennzeichnet, daß** die Kraftsensoren ein Meßglied bilden, das an einem Ende dem zugehörigen Endbeschlag des Zurrmittels angepaßt ist und am anderen Ende dem Anschlagpunkt angepaßt ist, so daß das Meßglied mit dem einen Ende mit dem Fahrzeug verbunden werden kann und daß das Zurrmittel seinerseits mit dem Meßglied verbunden werden kann,
wobei das Meßglied vorzugsweise an dem einen Ende als Öse und an dem anderen Ende als Haken ausgebildet ist
oder das Meßglied auf das Zurrmittel aufsetzbar ist, wobei das Meßglied vorzugsweise auf dem Zurrmittel verklemmbar ist.

5. Ladungssicherung nach Anspruch 4, **dadurch gekennzeichnet, daß** das Meßglied aus einem Rahmen besteht, der aus Seitenwangen und mindestens drei in Längsrichtung des Zurrmittels hintereinander angeordneten Bolzen zusammen gesetzt ist, wobei das Zurrmittel um mindestens einen Bolzen im Bogen herumgeführt ist, so daß der Rahmen beim Spannen des Zurrmittels auf Biegung belastet wird.

6. Ladungssicherung nach Anspruch 4 oder 5, **dadurch gekennzeichnet, daß** ein zwischen zwei Bolzen vorgesehener weiterer Bolzen einsetzbar und lösbar angeordnet ist, so daß das Zurrmittel im entspannten Zustand durch den Rahmen durchdrückbar ist und mit dem einsetzbaren Bolzen hinterfaßt werden kann
oder
das Meßglied seitlich auf das vorher in mindestens einen Bogen gelegte Zurrmittel aufschiebbar ist und das Zurrmittel umfaßt, so daß das Zurrmittel bei seiner Spannung das Meßglied auf Biegung belastet
wobei das Meßglied vorzugsweise durch eine Gabel mit mindestens drei Zinken gebildet wird.

7. Ladungssicherung nach einem der Ansprüche 1 bis 6,
**gekennzeichnet durch** Kraftsensoren mit Dehnungsmeßstreifen oder
mit einem Silizium-Drucksensor.

8. Ladungssicherung nach einem der Ansprüche 1 bis 12, **gekennzeichnet durch** Kraftsensoren, die über mindestens eine Leitung mit dem Fahrerhaus oder Führerstand oder Cockpit oder Schiffsbrücke verbunden sind.

9. Ladungssicherung nach Anspruch 8, **dadurch gekennzeichnet, daß** zwischen dem Meßglied und der Leitung im Fahrzeug eine Steckerverbindung vorgesehen ist, wobei das zum Fahrzeug gehörige Steckerteil an einem beweglichen Leitungsende und/oder das zum Meßglied gehörige Steckerteil an einem beweglichen Leitungsende angeordnet ist, so daß die Steckverbindung an unterschiedlichen Anschlagstellen für die Zurrmittel möglich ist.

10. Ladungssicherung nach einem der Ansprüche 1 bis 9, gekennzeichnet Kraftsensoren, welche zugleich als Funksensoren ausgebildet sind und denen ein Empfänger im Fahrerhaus, Führerstand, Cockpit oder Schiffsbrücke zugeordnet ist.

11. Ladungssicherung nach einem der Ansprüche 8 bis 10, **gekennzeichnet durch** batteriebetriebene Kraftsensoren.

12. Ladungssichtung nach einem der Ansprüche 1 bis 11, **gekennzeichnet durch** eine diskontinuierliche Kraftmessung.

13. Ladungssicherung nach Anspruch 12, **dadurch gekennzeichnet, daß** zwischen zwei Messungen mindestens eine Meßpause von 30Sekunden, noch weiter bevorzugt mindestens von 60Sekunden und höchst bevorzugt von mindestens 90 Sekunden vorgesehen sind.

14. Ladungssicherung nach einem der Ansprüche 1 bis 13, **dadurch gekennzeichnet, daß** die Kraftsensoren nacheinander betätigt werden, so daß die Meßwerte durch den Zeitpunkt der Betätigung einem Kraftsensor zuordnenbar sind.

15. Ladungssicherung nach einem der Ansprüche 1 bis 14, **dadurch gekennzeichnet, daß** mehrere Kraftsensoren gleichzeitig tätig werden, wobei die Meßwerte mit einem Code versehen werden, so daß die Meßwerte beim Empfänger den richtigen Kraftsensoren zuordnenbar sind.
